Europäisches Patentamt

European Patent Office

Office européen des brevets

(19)

(11) Veröffentlichungsnummer: **0 063 802**
**B1**

(12) **EUROPÄISCHE PATENTSCHRIFT**

(45) Veröffentlichungstag der Patentschrift:
14.08.85

(21) Anmeldenummer: 82103460.0

(22) Anmeldetag: 23.04.82

(51) Int. Cl.⁴: **F 16 N 11/00,** B 65 G 45/02

(54) Fettschmiervorrichtung zum Schmieren der Kettenbolzen einer laufenden Kette.

(30) Priorität: 28.04.81 HU 109381

(43) Veröffentlichungstag der Anmeldung:
03.11.82 Patentblatt 82/44

(45) Bekanntmachung des Hinweises auf die Patenterteilung:
14.08.85 Patentblatt 85/33

(84) Benannte Vertragsstaaten:
DE FR GB NL

(56) Entgegenhaltungen:
CH - A - 371 646
DE - A - 1 750 463
DE - C - 468 536
US - A - 2 848 068

(73) Patentinhaber: **INDUSTRIALEXPORT, Oktober 6. utca 7., Budapest V (HU)**

(72) Erfinder: **Bakosi, László, Felház u. 7., Cegléd (HU)**
Erfinder: **Horvàth, Jenö, Dipl.-Ing., Villányi u. 51., Budapest XI (HU)**
Erfinder: **Paulovits, Sándor, Dipl.-Ing., Fenyö u.8., Budapest I. (HU)**
Erfinder: **Reich, László, Péter u.3., Abony (HU)**
Erfinder: **Sajben, Pál, Kiscelli u. 90., Budapest III. (HU)**
Erfinder: **Vàry, József, Dipl.-Ing., Szakasits A.u.90., Budapest XI (HU)**

(74) Vertreter: **Patentanwälte Viering & Jentschura, Steinsdorfstrasse 6, D-8000 München 22 (DE)**

## Beschreibung

Die Erfindung betrifft eine Fettschmiervorrichtung gemäss dem einleitenden Teil des Anspruchs 1. Die erfindungsgemässe Vorrichtung dient vorzugsweise zur Schmierung von Industrieketten mit Dornen.

Das Anwendungsgebiet der Industrieketten mit Dornen ist breit. Sie werden gleicherweise zum Antrieb und zum Fördern angewendet. Nach ihrer Gestaltung können die Kettenbolzen entweder mit einem Schmierloch versehen oder als Vollbolzen ausgebildet sein.

Ein spezieller Anwendungsbereich derartiger Förderketten liegt vor, wenn die Förderkette zum Transport von Konservendosen benutzt wird, um die Konservendosen durch eine Konservensterilisationsanlage zu transportieren. Die Förderkette läuft dabei in Wasserbädern von verschiedener Temperatur und durch den Dampfraum während der Wärmebehandlung hindurch, so dass sie über die mechanischen Beanspruchungen hinaus Verschmutzungen, Wärmeeinwirkungen und Schmierfettauswaschwirkungen der Wasserbäder mit unterschiedlichen Temperaturen ausgesetzt ist.

Die Schmierung der Förderkette hat besondere Bedeutung, weil sie zum einen die Lebensdauer und zuverlässige Dauerqualität der hochwertigen Kette aus rostfreiem Stahl grundsätzlich beeinflusst und weil sich zum anderen bei einer ungenügend geschmierten (trockenen) Kette die Biegbarkeitseigenschaften verschlechtern, so dass nach dem Ablauf von dem Richtrad die Streckung benachbarter Kettenglieder im Gelenkpunkt nicht zustande kommt und demzufolge der Abstand zwischen den Konservendosen, die auf den vorstehenden Dornen der Förderkette befestigt sind, abnimmt und sie ineinandergreifend eine ausserordentlich grosse Betriebsstörung verursachen können.

Die Schmierung der oben beschriebenen Förderkette wird bisher mittels einer Hochdruck-Fettschmiervorrichtung manuell so durchgeführt, dass der Schmierkopf der Vorrichtung gegen die Schmiermittelbohrung des Kettenbolzens gedrückt, das Ventil des Schmierkopfes manuell geöffnet und das Schmierfett den Gelenkpunkten der Förderkette zugeführt werden.

Eine in dieser Weise erfolgende Fettschmierung hat die Nachteile, dass sie sehr zeitaufwendig ist, eine ermüdende, eintönige Tätigkeit ist, ihre Qualität vom Menschen abhängig ist, so dass das Volumen des den einzelnen Gelenkpunkten zugeführten Fettes nicht gleichmässig ist, die Schmierung jedes einzelnen Gelenkpunktes nicht zuverlässig gewährleistet ist und eine übermässige Fettzufuhr möglich ist, was einen Mehraufwand an Kosten und ungewünschte Verschmutzungen der Konservendosen mit sich bringt. Letzteres ist bei den teueren Silikonfetten besonders ungünstig.

Es ist jedoch auch bereits eine selbsttätige Fettschmiervorrichtung gemäss dem einleitenden Teil des Anspruchs 1 bekannt (DE-A-1750463), bei welcher mittels der axialen Führungskurve die jeweilige Fettschmiereinheit mit ihrem Schmiernippel gegen den zugeordneten Kettenbolzen gedrückt wird. Dadurch wird das Abgabeventil der Fettschmiereinheit geöffnet, so dass das Schmierfett, welches mittels einer Pumpe in die Fettschmiereinheit gefördert wird, unter dem Pumpendruck in die Schmiermittelbohrung des Kettenbolzens hineingepresst wird, solange der Schmiernippel gegen denselben gedrückt ist. Daher ist die dem Kettenbolzen zudosierte Schmierfettmenge abhängig von der jeweiligen Drehgeschwindigkeit des Kettenrades. Ausserdem ist der Weg des Schmierfettes von der Pumpe bis zu dem Schmiernippel der Fettschmiereinheit lang, wodurch die Druckverluste hoch sind und daher ein entsprechend hoher Druck erforderlich ist, der von den Dichtungen aufgenommen werden muss.

Mit der Erfindung wird die Aufgabe gelöst, eine Fettschmiervorrichtung der vorliegenden Art so auszubilden, dass eine genaue Dosierung der jeweils ausgegebenen Schmierfettmenge erreicht ist und dass trotz eines hohen Druckes, unter welchem das Schmierfett ausgegeben wird, ein nur geringer Druck für das Fördern des Schmierfettes aus dem Fettvorratsraum in den Dosierraum der Fettschmiereinheiten erforderlich ist.

Dies wird gemäss der Erfindung durch die kennzeichnenden Merkmale aus dem Anspruch 1 erreicht. Bevorzugte Weiterbildungen der Erfindung sind durch die Ansprüche 2 bis 6 angegeben.

Bei der erfindungsgemässen Fettschmiervorrichtung ist die jeweils von den Fettschmiereinheiten ausgegebene Schmierfettmenge von dem Dosierhub des Dosierkolbens und daher der axialen Stellung der axialen Führungskurve abhängig. Durch Änderung der Stellung der Führungskurve lässt sich daher die ausgegebene Fettmenge einstellen. Da ausserdem der Ausgabedruck des Schmierfettes aus den Schmierfetteinheiten von der zwangsläufigen Bewegung des Dosierkolbens abgeleitet ist, von welchem das Schmierfett aus dem Dosierraum durch die Schmierfettbohrung des Schmiernippels gepresst wird, kann der Druck für die Zufuhr des Schmierfettes in den Dosierraum gering sein.

Weitere die Erfindung ausgestaltende Merkmale sind aus der folgenden Beschreibung einer bevorzugten Ausführungsform und der zugehörigen Zeichnung ersichtlich. In der Zeichnung zeigt:

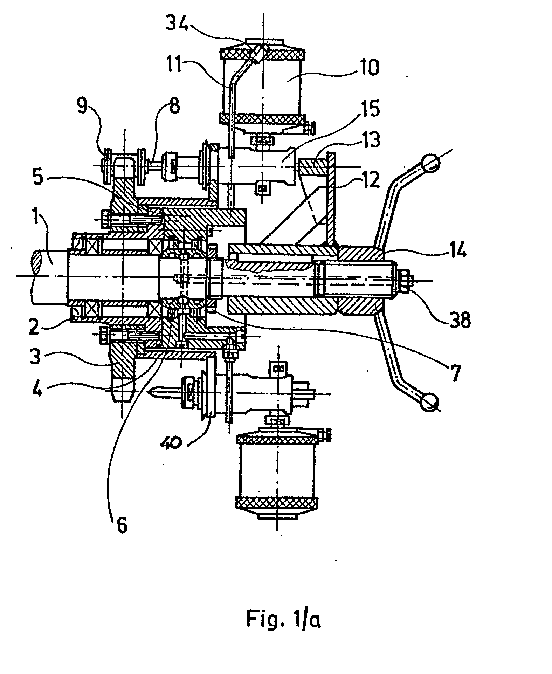

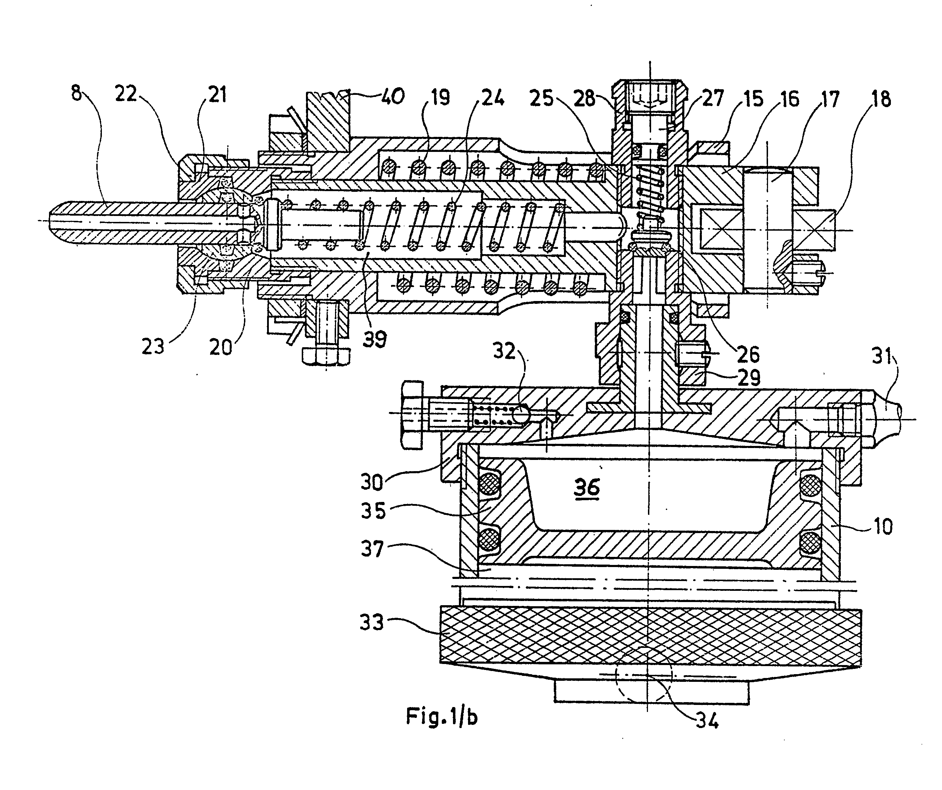

Fig. 1/a einen Längsschnitt durch eine erfindungsgemässe Fettschmiervorrichtung, die während kontinuierlicher Rotation selbsttätig arbeitet und im ausgegebenen Fettvolumen stufenlos verstellbar ist, und

Fig. 1/b einen Schnitt durch eine der Fettschmiereinheiten der Vorrichtung aus Fig. 1/a.

Wie aus der Zeichnung ersichtlich, ist auf einer stationären Hauptachse 1 über Rollenlager eine Nabe 2 gelagert, an der über eine Schraubverbindung ein Kettenrad 3, eine koaxial zu diesem angeordnete Mitnehmerbuchse 4 mit einer radialen Tragscheibe 40 für die Fettschmiereinheiten sowie innerhalb der Buchse 4 ein Druckluftverteilergehäuse 5 befestigt sind. In der Innenbohrung des Druckluft-Verteilergehäuses 5 ist auf der Hauptachse 1 ein über O-Ringe an dieser abgedichteter Verteilerring 6 zentriert, der mittels einer Nutmutter 7 auf der Hauptachse 1 festgelegt ist und der einerseits als axiales Festlager für die Innenringe der beiden Rollenlager der Nabe 2 und andererseits als Laufbuchse für zwei an dem Verteilergehäuse 5 axial im Abstand voneinander angeordneten Dichtungsringen dient, zwischen denen eine ringförmige Luftverteilerkammer ausgebildet ist. Die Luftverteilerkammer steht über mehrere Radialbohrungen in dem Verteilerring 6 und in der Hauptachse 1 mit einer in dieser ausgebildeten Axialbohrung in Verbindung, die an dem freien Ende der Hauptachse 1 an einer Anschlussarmatur 38 endet, an welche eine Druckluftquelle angeschlossen werden kann.

In der an der Buchse 4 festgelegten radialen Tragscheibe 40 sind im Kreis mit einem Radius, welcher mit dem Radius des Kreises übereinstimmt, auf dem die Kettenbolzen 9 der zu schmierenden Kette das Kettenrad 3 umlaufen, Zentrierlöcher für die Fettschmiereinheiten ausgebildet, die mit ihren Schmiernippeln 8 an die Kettenbolzen 9, die sich auf einem durch das Kettenrad 3 festgelegten Bogen bewegen, auf einer bestimmten Strecke des Kreisbogens herangeführt werden.

Ein wesentliches Merkmal der konstruktiven Auslegung der erfindungsgemässen Fettschmiervorrichtung liegt darin, dass die Anzahl der Fettschmiereinheiten mit der Anzahl der Zähne auf dem Kettenrad 3 übereinstimmt.

Für jede Fettschmiereinheit ist ein Fettvorratszylinder 10 vorgesehen, der einen mit Druckluft beaufschlagten Kolben 35 aufweist, die aus dem Verteilergehäuse 5 über in diesem ausgebildete Bohrungen und eine flexible Rohrleitung 11 sowie eine Zuführöffnung 34 dem Druckraum des Vorratszylinders 10 zugeführt wird.

An dem freien Ende der Hauptachse 1 sitzt auf dieser eine Konsolnabe 12, an der eine axiale Führungskurve 13 ausgebildet ist, von welcher die Fettschmiereinheiten während ihres Umlaufs axial zu dem Kettenrad 3 hin verschoben und für die Ausgabe einer dosierten Fettmenge betätigt werden. Die mit der Führungskurve 13 ausgestattete Konsolnabe 12 ist mittels einer Passfeder auf der Hauptachse 1 axial verschiebbar und drehfest mit dieser verbunden, so dass sie wie diese stillsteht. Die Konsolnabe 12 kann durch Verdrehen einer mit Verstellarmen versehenen Stellmutter 14, die auf ein Gewinde am freien Ende der Hauptachse 1 aufgeschraubt ist, axial auf dieser verstellt werden.

Wie aus Fig. 1/b ersichtlich, weist jede der Fettschmiereinheiten ein Führungsgehäuse 15 auf, das in dem zugeordneten Zentrierloch der Tragscheibe 40 zentriert an dieser mittels einer Nutmutter und einer Feststellschraube festgelegt ist. In dem zylindrischen Führungsgehäuse 15 ist ein Dosierkolben 16 gegen die Kraft einer an dem Führungsgehäuse 15 und dem Dosierkolben 16 abgestützten Rückstellfeder 19 axial verschiebbar geführt. Am freiliegenden, über das Führungsgehäuse 15 hinausragenden Ende des Dosierkolbens 16 ist in diesem eine Kugellagerrolle 18 mittels eines Bolzens 17 gelagert, die mit der feststehenden Führungskurve 13 zusammenwirkt.

An dem entgegengesetzten Ende des Dosierkolbens 16 ist an der der Laufrolle 18 abgewendeten Seite der Tragscheibe 40 mittels einer Hutringmutter 22 ein geteilter Kugelsitz 20, 21 für eine Verstellkugel 23 befestigt, in welcher der zylindrische Schmiernippel 8 axial verschiebbar geführt ist. Zwischen den Teilen des Kugelsitzes 20, 21 und zwischen der Verstellkugel 23 und dem Schmiernippel 8 ist jeweils ein O-Ring zur Abdichtung eingebaut.

Die axiale, als Sackloch ausgeführte Schmierbohrung des Schmiernippels 8 mündet über Radialbohrungen an dessen Umfangsfläche an einer Stelle, die in der Ausgangsstellung des Schmiernippels 8 innerhalb der Führungsbohrung der Verstellkugel 23 liegt, so dass die Mündungen der Radialbohrungen in dieser Ausgangsstellung von der Wand der Führungsbohrung verschlossen werden. Mit dem der Ausgabemündung des Schmiernippels 8 abgewendeten Ende ragt dieser axial in einen Dosierraum 39 hinein, der in dem Dosierkolben 16 ausgebildet ist und in dem eine an diesem und einem Aussenbund des Schaftes des Schmiernippels 8 abgestützte Feder 24 aufgenommen ist, von welcher dieser in seine Ausgangsstellung gedrückt wird, in der er mit einem auf ihm zwischen seinem Aussenbund und der Verstellkugel sitzenden O-Ring an dieser anliegt, so dass der Dosierraum 39 gegen die Führungsbohrung der Verstellkugel 23 abgedichtet verschlossen ist.

Vor der Kurvenführungsrolle 18 weist der Dosierkolben 16 ein in ihn radial eingeschraubtes Zwischenstück 29 auf, welches durch einen axialen Führungsschlitz des zylindrischen Führungsgehäuses 15 hindurchragt und an dem ausserhalb des Führungsgehäuses 15 der Fettvorratszylinder 10 mit seinem Bodendeckel 30 über die Dichtringe abgedichtet mittels einer Feststellschraube festgelegt ist. Der Dosierraum 39 in dem Dosierkolben 16 mündet über das Zwischenstück 29 in den unter Druck stehenden Fettraum 36 des Vorratszylinders 10. An der Innenseite bildet das Zwischenstück 29 einen Sitz für den Ventilkörper eines Rückschlagventiles 26, dessen Ventilfeder 25 an einer Einstellschraube 27 abgestützt ist, die in ein Schraubgehäuse 28 eingeschraubt ist, welches an der dem Vorratszylinder 10 abgewendeten Radialseite des Dosierkolbens 16 mit diesem verschraubt ist und durch einen zweiten axialen Führungsschlitz im Führungszylinder 15 axial zum Dosierkolben 16 mit diesem verschiebbar geführt ist.

In dem Bodendeckel 30 des Vorratszylinders 10 sind ein Füllnippel 31 zur Auffüllung des Vorratszylinders mit Fett, und ein Sicherheitsventil 32 zur Vermeidung einer Überfüllung eingebaut. Der Fettraum 36 des Vorratszylinders 10 ist von einem in diesem verschiebbaren, mit Dichtringen ausgestatteten Kolben 35 begrenzt, an dessen dem Fettraum 36 abgewendeter Seite in dem Vorratszylinder 10 ein Druckluftraum 37 ausgebildet ist, in welchen die Druckluft-Zuführöffnung 34 mündet, die in dem äusseren Deckel 33 des Vorratszylinders 10 ausgebildet ist.

Die erfindungsgemässe Fettschmiervorrichtung läuft während des Betriebes mit dem Kettenrad 3 um, wobei die Schmiernippel 8 der Fettschmiereinheiten auf die Zahnlücken zwischen den Zähnen des Kettenrades 3 ausgerichtet sind, in denen die zu schmierenden Kettenbolzen 9 der Kette während ihres Umlaufs um das Kettenrad 3 liegen. Während des Umlaufs der Schmiereinheiten werden deren Dosierkolben 16 über deren Kurvenführungsrollen 18 von der stillstehenden axialen Führungskurve 13 nacheinander axial zu dem Kettenrad 3 hin verschoben, so dass der Schmiernippel 8 der betreffenden Fettschmiereinheit axial auf den zu schmierenden Kettenbolzen 9 auftrifft und mit seiner Schmiermittelbohrung in die Schmiermittelbohrung des Kettenbolzens 9 mündet. Dadurch wird der Schmiernippel 8 gegen die Kraft der Rückstellfeder 24 in den Dosierraum 39 des sich weiter vorbewegenden Dosierkolbens 16 hinein verschoben, so dass die Mündung der Schmiermittelbohrung des Schmiernippels 8 aus der Verstellkugel 23 austritt und daher zu dem Dosierraum 39 hin geöffnet wird. Durch die weitere Vorschubbewegung des Dosierkolbens 16 wird dann das im Dosierraum 39 vorhandene Schmierfett in die Schmiermittelbohrung des Kettenbolzens 9 in einer Menge eingepresst, die durch den weiteren Vorschubweg des Dosierkolbens 16 und daher der axialen Stellung der Führungskurve 13 auf der Hauptachse 1 bestimmt ist. Hierbei wird das Rückschlagventil 26 infolge des im Dosierraum 39 herrschenden Überdruckes und der Kraft seiner Schliessfeder 25 geschlossen, so dass ein Rücklauf des Schmierfettes aus dem Dosierraum 39 in den Fettzylinder 10 verhindert ist.

Nach dem Schmiervorgang gibt die Führungskurve 13 den Dosierkolben 16 für dessen Rückkehr in die aus Fig. 1/b ersichtliche Ausgangsstellung unter der Kraft der Rückstellfeder 19 frei. Dabei wird der Schmiernippel 8 unter der Kraft seiner Rückstellfeder 24 in seine Ausgangsstellung zurückgeschoben, in welcher die Schmiermittelbohrung des Schmiernippels 8 gegen den Dosierraum 39 hin wieder von der Verstellkugel·23 verschlossen wird. Beim weiteren Rückkehrhub des Dosierkolbens 16 entsteht in dem Dosierraum 39 ein Unterdruck, so dass im Zusammenwirken mit dem Überdruck im Vorratsbehälter 10 das Schmierfett aus dem Fettraum 36 des Fettzylinders 10 über das sich öffnende Rückschlagventil 26 in der vorher aus dem Dosierraum 39 ausgegebenen Menge in diesen nachströmt.

Die in den jeweiligen Kettenbolzen 9 eingepresste Fettmenge wird daher von dem Dosierhub des Dosierkolbens 16 bestimmt. Diesem Dosierhub geht ein Leerhub voraus, in dem der Schmiernippel 8 an den Kettenbolzen 9 herangefahren wird und der daher von dem axialen Anfangsabstand des Schmiernippels 8 von den das Kettenrad 3 umlaufenden Kettenbolzen 16 bestimmt wird. Der Gesamthub aus dem Leerhub und dem Dosierhub liegt durch die Gestaltung der axialen Führungskurve 13 fest, so dass durch deren axiale Verstellung auf der Hauptachse 1 der Leerhub und damit der Dosierhub verändert werden und daher die stufenlose Fettvolumenregelung zwischen Null und einem Maximum ermöglicht wird.

Da das Fett aus dem Fettzylinder 10 unmittelbar in den Dosierraum 39 des Dosierkolbens 16 eintritt, kann der hierfür erforderliche Druck der dem Fettzylinder 10 zugeführten Druckluft gering sein und eine eventuelle Verfestigung des Schmierfettes führt nicht zu Schwierigkeiten.

Der in der Fettschmiervorrichtung angewendete geringe Druck gewährleistet eine grosse Lebensdauer für die Konstruktionsteile, besonders für die Dichtungen, und einen ruhigen Betrieb der Fettschmiervorrichtung. Gleichwohl ist ein hoher Schmierpressdruck aufgrund des zwangsläufig vorgeschobenen Dosierkolbens 16 vorhanden, so dass das Schmierfett auch bei grösseren Widerständen zuverlässig in die Gelenke der zu schmierenden Kette in der vorbestimmten Dosiermenge eintritt. Überdies ermöglicht die erfindungsgemässe Fettschmiervorrichtung die Schmierung der mit Schmierbolzen versehenen Ketten während deren kontinuierlicher Bewegung.

Durch die allseits schwenkbare Lagerung der Schmiernippel 8, die an ihrem freien Ende eine Zentrierkalotte aufweisen, in der Verstellkugel 23 erfolgt selbsttätig die Zentrierung der Schmiernippel 8 an dem Rand der Mündung der Schmiermittelbohrung des zu schmierenden Kettenbolzens 9, sobald der Schmiernippel 8 mit seiner Zentrierkalotte auf den Mündungsrand auftrifft.

**Patentansprüche**

1. Fettschmiervorrichtung zum Schmieren der Kettenbolzen (9) einer mit einem Kettenrad (3) umlaufenden Kette, mit um die stillstehende Achse (1) des Kettenrades (3) mit diesem umlaufenden Fettschmiereinheiten, die jeweils einen Dosierraum (39), der mit einem unter Druck stehenden Fettvorratsraum (36) verbindbar ist, und einen dem Kettenrad (3) zugewendeten Schmiernippel (8) aufweisen, wobei die Fettschmiereinheiten in einem Führungsgehäuse (15) mittels einer darin geführten Gleithülse (16), die mit ihrem dem Schmiernippel (8) abgewendeten Ende mit einer stillstehenden axialen Führungskurve (13) zusammenwirkt, während ihres Umlaufs gegen die Kraft einer Feder (19) axial verstellbar sind und mit ihrem Schmiernippel (8) an die mit dem Kettenrad (3) umlaufenden Kettenbolzen (9) anpressbar sind und für eine dosierte Fettzufuhr betätigbar sind, dadurch gekennzeichnet, dass die Gleithülse als Dosierkolben (16) ausgebildet ist, in welchem sich der Dosierraum (39) befindet, der mit dem Fettvorratsraum (36) über ein zu diesem hin schliessendes Rückschlagventil (26) verbunden ist, dass der Schmiernippel (8), der mit seinem dem Kettenrad (3) abgewendeten Ende den Dosierraum (3) begrenzt, an dem Dosierkolben (16) gegen die Kraft einer zweiten Rückstellfeder (24) axial verschiebbar geführt ist, und dass die Schmierfettbohrung des Schmiernippels (8) an dem dem Kettenrad (3) abgewendeten Ende seitlich mündet, in Ruhestellung des Schmiernippels (8), gegen den Dosierraum (39) hin verschlossen ist und in dessen Dosierstellung in diesen mündet.

2. Fettschmiervorrichtung nach Anspruch 1, dadurch gekennzeichnet, dass jede Fettschmiereinheit einen Fettvorratszylinder (10) aufweist, dessen Fettvorratsraum (36) von einem druckluftbeaufschlagten Kolben (35) begrenzt ist.

3. Fettschmiervorrichtung nach Anspruch 2, dadurch gekennzeichnet, dass zur Druckluftzufuhr in die Vorratszylinder (10) in der Achse (1) des Kettenrades (3) ein mit einer Anschlussarmatur (38) versehenes Bohrungssystem ausgebildet ist und auf der Achse (1) ein über Dichtungsringe abgedichteter Verteilerring (6) in einem mit dem Kettenrad (3) umlaufenden Druckluft-Verteilergehäuse (5) angeordnet ist, das mittels Dichtringen an dem Verteilerring (6) abgedichtet ist und an Druckluftzufuhröffnungen (34) der Vorratszylinder (10) angeschlossen ist.

4. Fettschmiervorrichtung nach einem der Ansprüche 1 bis 3, dadurch gekennzeichnet, dass der Schmiernippel (8) an dem Dosierkolben (16) in einem allseits drehverstellbaren Gelenklager (23) geführt ist.

5. Fettschmiervorrichtung nach einem der Ansprüche 1 bis 4, dadurch gekennzeichnet, dass die Führungskurve (13) axial verstellbar an der feststehenden Achse (1) des Kettenrades (3) gehalten ist.

6. Fettschmiervorrichtung nach einem der Ansprüche 1 bis 5, dadurch gekennzeichnet, dass das Rückschlagventil (26) eine einstellbare Ventilfeder (25) aufweist.

**Claims**

1. Greasing device for lubricating the chain link pins (9) of a chain moving with a sprocket (3), comprising greasing units moving together with the chain sprocket (3) around the stationary shaft (1) of the latter, each greasing unit having a dispensing chamber (39) connectible to a pressurised grease storage chamber (36) and a greasing nipple (8) facing the chain sprocket (3), wherein during their circulation the greasing units are axially adjustable against the bias of a spring (19) in a guide housing (15) by means of a sliding sleeve (16) guided in the housing, which sleeve co-operates by way of its end remote from the greasing nipple (8) with a stationary axial guiding cam (13), the greasing units being pressible by their greasing nipples (8) against the chain link pins (9) moving with said sprocket (3) and being operable for a metered grease supply, characterised in that the sliding sleeve is formed as a metering piston (16) in which the dispensing chamber (39) is located which is connected to the grease storage chamber (36) by way of a non-return valve (26) closing towards the grease storage chamber (36); in that the end of the greasing nipple (8) which is remote from the chain sprocket (3) forms a boundary of the dispensing chamber (39), the greasing nipple being axially slidably guided on the metering piston (16) against the force of a second restoring spring (24); and in that the end of the lubricating bore of the greasing nipple (8) remote from the chain sprocket (3) opens sideways of the greasing nipple (8), is closed off from the dispensing chamber (39) in the rest position of the greasing nipple (8) and in its dispensing position opens into the dispensing chamber.

2. Greasing device according to claim 1, characterised in that each greasing unit comprises a grease storage cylinder (10) the grease storage chamber (36) of which is bounded by a piston (35) loaded by compressed air.

3. Greasing device according to claim 2, characterised in that a bore system fitted with a connector coupling (38) is formed in the shaft (1) of the chain sprocket (3) for supplying compressed air to the grease storage cylinder (10) and a distributor ring (6) sealed by gaskets is arranged on the shaft (1) in a compressed air distributor housing (5) running around together with the chain sprocket (3), the housing being sealed at the distributor ring (6) by sealing rings and is connected to the compressed air supply apertures (34) of the grease storage cylinder (10).

4. Greasing device according to any one of claims 1 to 3, characterised in that the greasing nipple (8) is guided on the dispensing piston (16) in a ball and socket joint (23) which is rotatably displaceable on all sides.

5. Greasing device according to any one of claims 1 to 4, characterised in that the guiding cam (13) is axially displaceably held on the stationary shaft (1) of the chain sprocket (3).

6. Greasing device according to any one of claims 1 to 5, characterised in that the non-return valve (26) is provided with an adjustable valve spring (25).

**Revendications**

1. Dispositif de graissage pour graisser les tourillons (9) d'une chaîne tournant autour d'un pignon de chaîne (3), comportant des unités de graissage entraînées en rotation avec le pignon de chaîne (3) autour de son arbre fixe (1) et qui comportent respectivement une chambre de dosage (39), qui peut être reliée à une chambre de graisse (36) sous pression, ainsi qu'un graisseur (8) tourné vers le pignon de chaîne (3), les unités de graissage étant mobiles axialement au cours de leur révolution en opposition à la force d'un ressort (19) dans un carter de guidage (15) au moyen d'un manchon coulissant (16) guidé dans celui-ci, qui coopère par son extrémité opposée au graisseur (8) avec une came de guidage axial fixe (13), et qui peuvent être appliquées par leur graisseur (8) contre le tourillon de chaîne (9) tournant avec le pignon de chaîne (3) et qui peuvent être actionnées pour fournir une quantité dosée de graisse, caractérisé en ce que le manchon coulissant est agencé comme un piston de dosage (16) dans lequel se trouve une chambre de dosage (39) qui est relié à la chambre de réserve de graisse (36) par l'intermédiaire d'un clapet anti-retour (26)

5

se fermant vers celui-ci, en ce que le graisseur (8), qui délimite la chambre de dosage (3) par son extrémité opposée au pignon de chaîne (3), est guidé de façon à coulisser axialement dans le piston de dosage (16) en opposition à la force d'un second ressort de rappel (24) et en ce que le trou de passage de graisse du graisseur (8) débouche latéralement à l'extrémité opposée au pignon de chaîne (3), et est fermé dans la position de repos du graisseur (8) par rapport à la chambre de dosage (39) et débouche dans celui-ci dans sa position de dosage.

2. Dispositif de graissage selon la revendication 1, caractérisé en ce que chaque unité de graissage comporte un cylindre de réserve de graisse (10) dont la chambre de réserve de graisse (36) est délimitée par un piston (35) actionné à l'air comprimé.

3. Dispositif de graissage selon la revendication 2, caractérisé en ce que, pour l'admission d'air comprimé dans le cylindre réservoir (10), il est prévu dans l'arbre (1) du pignon de chaîne (3) un circuit de passage muni d'un raccord de liaison (38) et sur l'arbre (1) est disposé un anneau distributeur (6), étanché par l'intermédiaire de bagues d'étanchéité, dans un carter de distribution d'air comprimé (5) tournant avec le pignon de chaîne (3), qui est étanché au moyen de bagues d'étanchéité placées sur l'anneau distributeur (6) et qui est relié à des orifices d'admission d'air comprimé (34) du cylindre réservoir (10).

4. Dispositif de graissage selon une des revendications 1 à 3, caractérisé en ce que le graisseur (8) est guidé sur le piston de dosage (16) dans un palier d'articulation (23) susceptible d'être orienté en rotation dans toutes les directions.

5. Dispositif de graissage selon une des revendications 1 à 4, caractérisé en ce que la came de guidage (13) est supportée par l'arbre fixe (1) du pignon de chaîne (3) de façon axialement réglable.

6. Dispositif de graissage selon une des revendications 1 à 5, caractérisé en ce que le clapet anti-retour (26) comporte un ressort de clapet réglable (25).

Fig. 1/a

8  22  21  40  19  24  25  28  27  15  16  17  18

23  20  39  32  26  29  31

30

35

37

33

36

10

34

Fig.1/b

0063802

9